Europäisches Patentamt

European Patent Office

Office européen des brevets

(11) Numéro de publication : **0 015 170**
**B1**

(12) **FASCICULE DE BREVET EUROPÉEN**

(45) Date de publication du fascicule du brevet :
**22.06.83**

(51) Int. Cl.³ : **G 01 N 21/25, G 01 J 3/42**

(21) Numéro de dépôt : **80400081.8**

(22) Date de dépôt : **18.01.80**

(54) Dispositif spectrophotométrique pour mesure à distance.

(30) Priorité : **30.01.79 FR 7902297**

(43) Date de publication de la demande :
**03.09.80 Bulletin 80/18**

(45) Mention de la délivrance du brevet :
**22.06.83 Bulletin 83/25**

(84) Etats contractants désignés :
**BE CH DE GB IT NL SE**

(56) Documents cités :
**FR A 2 317 638**
**GB A 1 054 767**
**US A 3 506 459**
**US A 3 784 307**
**ANALYTICAL CHEMISTRY, vol. 44, no. 9, août 1972, Washington, D.C. USA R. AUBEAU et al. « Determination of trace quantities of volatile fluoride in uranium hexafluoride using an infra-red spectrophotometer », pages 1628-1636**
**JOURNAL OF PHYSICS E : SCIENTIFIC INSTRU-MENTS, vol. 6, 1973, London, GB M. SUBRAMA-NIAN et al. « A glove box assembly for PERKIN ELMER 237 infrared spectrophotometer », pp. 431, 432**

(73) Titulaire : **COMMISSARIAT A L'ENERGIE ATOMIQUE Etablissement de Caractère Scientifique Technique et Industriel B.P. 510 F-75752 Paris Cedex 15 (FR)**

(72) Inventeur : **Boisde, Gilbert 30, rue Charles de Gaulle F-91440 Bures sur Yvette (FR)**
Inventeur : **Chevalier, Gilbert 77Bis, rue Legendre F-75017 Paris (FR)**
Inventeur : **Perez, Jean-Jacques 18 Villa Eugénie F-92320 Chatillon (FR)**

(74) Mandataire : **Mongrédien, André et al c/o BREVATOME 25, rue de Ponthieu F-75008 Paris (FR)**

## Dispositif spectrophotométrique pour mesure à distance

La présente invention a pour objet un dispositif spectrophotométrique pour mesure à distance.

De façon plus précise, l'invention concerne un dispositif permettant, par exemple, de déterminer la teneur d'une solution en un certain nombre de corps par une analyse spectrophotométrique, la solution à analyser étant telle que l'échantillon à analyser ne peut pas se trouver dans le compartiment du spectrophotomètre normalement destiné à contenir ledit échantillon. C'est par exemple le cas lorsque la solution à analyser est radioactive et que la cellule contenant cette solution doit être placée à l'intérieur d'une enceinte épaisse de protection et pour cette raison ne peut pas être placée dans ce compartiment.

L'emploi de colorimètres ou de photomètres pour mesurer la concentration en solution de diverses espèces ioniques par application de la loi de Beer est bien connue. Dans ce contexte, l'utilisation de fibres optiques pour la mesure à distance de la teneur dans ces diverses espèces de la solution est également bien connue. Il est également bien connu de se servir de fibres optiques associées à des miroirs réfléchissant la lumière pour obtenir des sondes de mesure immergées dans les solutions à analyser dans le cadre de colorimètres. Ces sondes peuvent éventuellement avoir des parcours variables recalibrés automatiquement par calculateurs. On connaît également l'emploi de lentilles à la sortie de faisceaux de fibres optiques souples pour focaliser le faisceau lumineux véhiculé par la fibre optique ou au contraire pour obtenir un faisceau lumineux parallèle.

L'emploi des fibres optiques est décrite, par exemple, dans les documents GB-A-1 054 767 et FR-A-2 317 638.

Cependant, lorsque les espèces présentes en solution que l'on veut analyser sont mal définies, il est préférable, sinon indispensable, d'explorer de façon spectrale la solution à l'aide d'un dispositif à balayage selon les longueurs d'onde grâce à l'emploi d'un prisme ou mieux d'un réseau holographique. L'appareil de mesure correspondant est alors appelé spectrophotomètre. Cependant, dans le cas de l'utilisation d'un spectrophotomètre les dispositions prévues et connues dans le cadre de l'emploi d'un colorimètre ou d'un photomètre ne sont plus applicables. En fait, la sensibilité des spectrophotomètres est nettement supérieure à celle des colorimètres classiques et les circuits connus par fibres optiques pour relier la cellule dans laquelle se trouve la solution au colorimètre, ne sont plus applicables au cas de l'analyse à l'aide d'un spectrophotomètre.

L'invention est applicable à divers types de spectrophotomètres connus. Parmi ces spectrophotomètres, on peut citer les appareils développés aux Etats-Unis par la Société BECKMAN (DK2, Acta IV, 52-40, 52-70, etc.), les appareils fabriqués par la Société PERKIN et ELMER, les appareils fabriqués par la Société BAUSCH et LOMB, ceux qui sont fabriqués par la Société CARY et en France, ceux qui sont fabriqués par la Société JOBIN YVON ou la S.A.F.A.S.

On peut indiquer en particulier que dans le cadre de l'utilisation de spectrophotomètres, les caractéristiques de monochromatisme du faisceau lumineux à transmettre qui sont indispensables à cette mesure ne sont pas compatibles avec les dispositifs déjà connus de transmission de l'information lumineuse entre la cellule de mesure et le photomètre.

Par ailleurs, il faut indiquer que dans les spectrophotomètres connus, il n'est pas possible de faire une mesure à distance. Plus précisément, ce spectrophotomètre connu comprend un compartiment entre la source et le détecteur dans lequel on vient placer les cellules de référence et de mesure, cette dernière contenant la solution à analyser. On comprend aisément que dans le cas où la solution à analyser est par exemple radioactive, il faut protéger la cellule de mesure et il est impossible de la placer dans le compartiment. Or, comme on l'a indiqué précédemment, la transmission des informations lumineuses entre le spectrophotomètre et la cellule pose des problèmes particuliers indiqués plus loin et que l'invention permet de résoudre.

Des exemples dans l'état de la technique d'analyse spectrophotométrique d'un échantillon radioactif sont décrits dans l'article de Subramanian et al. : « A glove box assembly for Perkin Elmer 237 infrared spectrophotometer », Journal of Physics E Scientific Instruments, vol. 6, 1973, pages 431-432 et dans la demande de brevet FR-A-2 317 638.

Il faut également mentionner que le demandeur a déjà développé plusieurs types de cellules photométriques à réflexions multiples qui permettent, pour une cellule dont les dimensions géométriques sont limitées, de réaliser un chemin optique pour le faisceau lumineux traversant la solution de longueur importante, par exemple de l'ordre du mètre. Pour plus de précisions sur ce type de cellule, on peut se reporter avantageusement à la demande de brevet français FR-A-2 390 725 déposée le 13 mai 1977 au nom du demandeur pour « Dispositif de photométrie à miroirs concaves et à optique de champ » ainsi qu'à la demande de brevet français FR-A-2 421 376, déposée au nom du demandeur le 30 mars 1978 pour « Cellule photométrique à réflexions multiples ». Il suffit d'indiquer que grâce à ces cellules qui, par des caractéristiques particulières permettent d'allonger le chemin optique dans la cellule, on peut analyser des solutions ne présentant que des traces du corps à détecter. En effet, il découle de la loi de Beer, qui détermine la relation entre la concentration d'un corps dans une solution et l'absorption lumineuse résultant de la présence de ce corps, que l'absorption est proportionnelle à la longueur du chemin optique parcouru par le faisceau lumineux. En augmentant par un système optique adéquat ce chemin lumineux, on augmente donc la sensibilité de l'appareil ou ce qui est équivalent, on conserve la sensibilité de l'appareil, même pour des solutions présentant des concentrations très faibles.

La présente invention à précisément pour objet un dispositif de mesure par spectrophotométrie à distance d'espèces en solution qui comporte des moyens spécifiques assurant la transmission du signal lumineux entre la cellule d'analyse contenant la solution à analyser et le spectrophotomètre qui permet d'obtenir une grande précision d'analyse. En outre, le dispositif permet, sans perturber la précision de la mesure, d'avoir une distance importante entre la position de la cellule contenant la solution à analyser et le spectrophotomètre. En particulier, mais non limitativement, ce dispositif permet d'avoir une telle distance importante entre le spectrophotomètre et la cellule lorsque celle-ci est placée dans une enceinte de protection vis-à-vis des rayonnements, c'est-à-dire lorsque la solution à analyser est radioactive. En outre, un mode de réalisation de l'invention permet, dans le cadre de la transmission de l'information optique par des fibres optiques et dans le cas d'une cellule de mesure contenant une solution radioactive placée dans une enceinte de protection, grâce à ses caractéristiques particulières, de s'affranchir des effets des rayonnements, en particulier des rayonnements gamma, sur les variations d'absorption de la fibre optique dans la transmission lumineuse. En particulier, les inventeurs ayant mis en évidence que cette variation de l'absorption dépend de plus des longueurs d'onde du faisceau lumineux, un mode de réalisation de l'invention permet une correction en fonction de la longueur d'onde utilisée pour la spectrophotométrie.

Le dispositif objet de l'invention comportant une source lumineuse, un monochromate, un détecteur, une optique pour définir un faisceau lumineux de mesure et un faisceau lumineux de référence et un compartiment situé entre la source et le détecteur, les faisceaux lumineux entrant et sortant de ce compartiment se caractérise en ce qu'il comporte en outre :

— au moins une cellule de mesure apte à recevoir une solution à analyser et distante dudit compartiment,

— une boucle de mesure comprenant un premier système optique logé dans ledit compartiment pour diriger le faisceau de mesure hors dudit compartiment, une première fibre optique dont une première extrémité reçoit ledit faisceau lumineux de mesure dudit premier système optique et dont l'autre extrémité est placée vis-à-vis d'une ou plusieurs lentilles disposées sur la face d'entrée de la ou desdites cellules, au moins une deuxième fibre optique raccordant une ou plusieurs deuxièmes lentilles disposées sur la face de sortie de la ou desdites cellules à une entrée dudit compartiment, et un deuxième système optique logé dans ledit compartiment et apte à diriger le faisceau lumineux émis par ladite deuxième fibre optique hors dudit compartiment vers ledit détecteur, et

— une boucle de référence comprenant un troisième système optique logé dans ledit compartiment pour diriger le faisceau de référence hors dudit compartiment, au moins une troisième fibre optique dont une première extrémité reçoit ledit faisceau lumineux de référence dudit troisième système optique et dont l'autre extrémité est raccordée à une entrée dudit compartiment, un quatrième système optique apte à diriger le faisceau lumineux émis par ladite troisième fibre optique vers ledit détecteur, et des moyens optiques permettant de compenser, au cours du temps, les modifications possibles des caractéristiques de transmission des fibres optiques de la boucle de mesure causées par la solution à analyser.

Selon un mode préféré de réalisation, ladite boucle de référence comprend une cellule de référence apte à recevoir une solution de référence et en ce que ladite fibre optique de la boucle de référence est constituée par deux portions de fibre optique entre lesquelles est placée ladite cellule de référence par l'intermédiaire de deux lentilles.

Selon un mode préféré de mise en œuvre, la ou lesdites cellules de mesure sont logées dans une enceinte de protection, chacune desdites deux fibres optiques de la boucle de mesure est constituée par deux portions de fibre optique entre lesquelles est interposé un système de traversée de ladite enceinte de protection.

De toute façon, l'invention sera mieux comprise à la lecture de la description qui suit d'un mode de réalisation de l'invention donné à titre d'exemple non limitatif. La description se réfère aux figures annexées sur lesquelles on a représenté :

sur la figure 1, une vue de l'ensemble de l'installation d'analyses spectrophotométriques à distance,

sur la figure 2, une vue simplifiée de l'optique du dispositif objet de l'invention et de la forme du faisceau lumineux dans les différentes parties du dispositif,

sur les figures 3 et 4, des courbes représentant la densité optique en fonction de la longueur d'onde pour respectivement un dispositif non compensé par fibre optique et le dispositif objet de l'invention, et

sur la figure 5, des courbes représentant la densité optique en fonction de la longueur d'onde par utilisation d'une cellule de grand parcours optique par un dispositif partiellement compensé par une fibre optique.

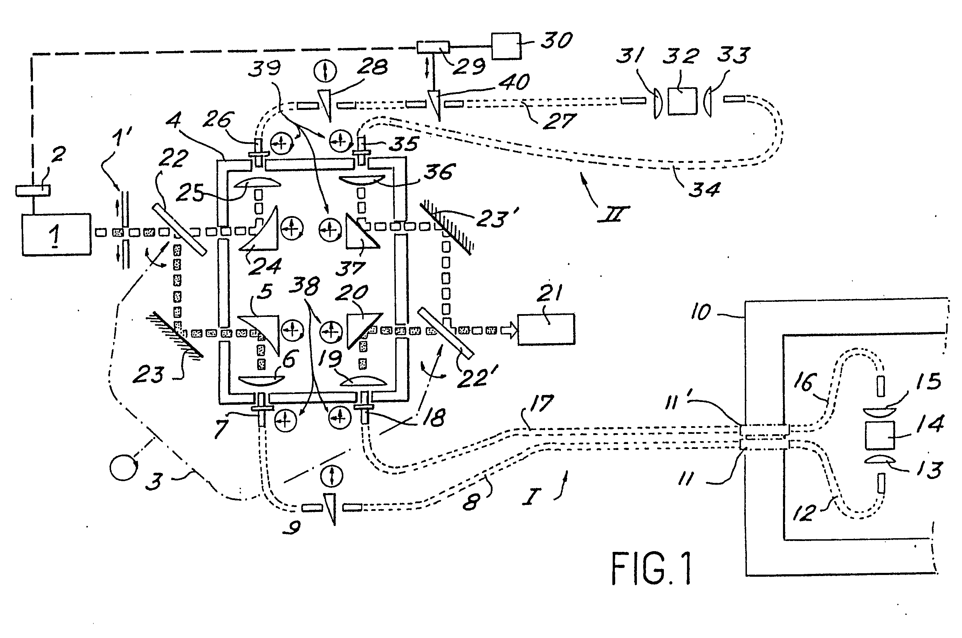

Le dispositif objet de l'invention comprend tout d'abord un spectrophotomètre de type classique, c'est-à-dire que l'on retrouve une source monochromatique 1 commandée par un dispositif de balayage en longueur d'onde 2. A cette source monochromatique, est associée une fente à largeur réglable 1' qui permet d'asservir l'énergie lumineuse émise. On trouve également dans ce spectrophotomètre un système de deux miroirs pivotants 22 et 22' commandés par le mécanisme 3 qui est simplement symbolisé sur la figure 1.

Entre ces deux miroirs 22 et 22', on trouve de façon connue le compartiment 4 du spectrophotomètre normalement destiné à contenir l'échantillon à analyser. Bien entendu, on trouve également à l'extérieur du compartiment 4 les miroirs plans 23 et 23'. Comme on l'a indiqué précédemment, tous les éléments décrits correspondent à un spectrophotomètre de type classique.

Selon un cas important de mise en œuvre de l'invention, la cuve 14 contenant la solution à analyser est placée à l'intérieur d'une enceinte blindée de protection 10 et une distance non négligeable peut exister entre la cellule 14 et le spectrophotomère proprement dit. D'une manière générale, on peut dire que le spectrophotomètre est équipé d'une boucle de mesure portant la référence I et qui relie le spectrophotomètre à la cellule de mesure 14 et, de préférence, d'une boucle de référence II qui relie le spectrophotomètre proprement dit à la cellule 32 de référence ou cellule témoin. On va décrire successivement la boucle de mesure I et la boucle de référence II.

Un miroir plan ou de préférence sphérique ou parabolique 5 est placé dans le compartiment 4 pour le renvoi vers l'extérieur du faisceau lumineux de mesure. Une lentille convergente de focalisation du faisceau lumineux assure la focalisation de ce faisceau vers la face d'entrée 7 d'une première fibre optique 8. La traversée de la paroi 10 de l'enceinte de protection se fait de préférence par des fibres optiques 11 du type de celles connues sous la marque commerciale « selfoc ». C'est-à-dire qu'il s'agit d'une fibre optique d'un type particulier qui assure à sa sortie, une divergence ou une convergence du faisceau lumineux. Elle se comporte donc comme une fibre optique normale associée à deux lentilles. On pourrait bien sûr remplacer la fibre optique de type particulier 11 par un hublot associé aux deux lentilles. Cependant, les fibres optiques connues sous la marque commerciale « selfoc » présentent de nombreux avantages pour le montage de la traversée de l'enceinte 10 et en particulier pour les problèmes d'étanchéité de cette traversée. La fibre optique 8 se prolonge à l'intérieur de l'enceinte 10 par une fibre 12 associée à une lentille 13 qui rend le faisceau lumineux parallèle à l'entrée de la cellule de mesure 14. A la sortie de la cellule 14, on trouve une lentille convergente 15 qui envoie le faisceau lumineux sortant de la cellule vers la face d'entrée d'une fibre optique 16 raccordée à une traversée 11' identique à la traversée 11. La cellule 14, comme on l'a déjà indiqué, est remplie par la solution à analyser. Le dispositif s'applique plus spécialement au cas où cette solution présente une radioactivité très importante, d'où la nécessité de placer cette cellule à l'intérieur de l'enceinte 10. Le retour du faisceau lumineux de mesure se fait par l'intermédiaire de la fibre optique 17, de la lentille 19 placée à l'intérieur du compartiment 4 qui donne un faisceau lumineux parallèle à partir du faisceau divergent émis par la face de sortie 18 de la fibre optique 17. On trouve ensuite un miroir plan 20 de renvoi du faisceau lumineux hors du compartiment vers le détecteur 21. En outre, dans le circuit constitué par la fibre optique 8, on peut interposer un coin optique réglable 9 constituant un système d'équilibrage de deux faisceaux lumineux. Il faut ajouter que l'enceinte 10 peut contenir plusieurs cellules de mesure. En effet, on peut utiliser des fibres optiques multibrins. Chaque brin peut être séparé dans l'enceinte de protection et correspondre à une cellule de mesure. De plus, les fibres optiques utilisées sont en un matériau qui supporte les doses d'irradiation présentes. On peut par exemple utiliser des fibres de silice. Dans le cas où la cellule de mesure n'est pas placée dans une enceinte de protection il n'y a plus de problème de traversée de paroi et les fibres 8 et 12 ainsi que les fibres 16 et 17 ne forment respectivement qu'une seule et même fibre.

La boucle de référence II ayant dans le mode le plus complet de réalisation, sensiblement la même structure que la boucle de mesure I, on la décrira plus succinctement en insistant essentiellement sur les différences. Cette boucle comporte un miroir plan ou de préférence sphérique ou parabolique 24, la lentille convergente 25 qui permet la sortie du faisceau lumineux de référence du compartiment 4, la fibre optique 27 avec son extrémité d'entrée 26, l'autre extrémité de la fibre 27 étant associée à une lentille 31 donnant à sa sortie un faisceau lumineux parallèle à l'entrée de la cellule de référence 32. A la sortie de celle-ci, on trouve une lentille convergente 33 et une deuxième fibre optique 34 dont la face de sortie 35 fait pénétrer le faisceau lumineux dans le compartiment 4. A l'intérieur de celui-ci, on trouve la lentille 36 qui renvoie un faisceau de lumière parallèle vers le miroir plan 37, celui-ci renvoyant le faisceau lumineux de référence vers le miroir 23'. On trouve également dans ce circuit un coin optique de compensation 28 jouant le même rôle que le coin 9 de la boucle de mesure I et un deuxième coin optique de réglage 40.

Comme on l'a indiqué précédemment, ce dispositif est utilisé lorsque la cellule de mesure 14 contient des solutions très radio-actives. Or, les inventeurs ont constaté que lorsque les fibres optiques étaient soumises à un rayonnement, par exemple un rayonnement gamma intense, il se produisait une modification des caractéristiques de la fibre optique et en particulier une modification du coefficient d'absorption de cette fibre en fonction de la dose reçue. En outre, ils ont établi que cette variation du coefficient d'absorption était également une fonction de la longueur d'onde du faisceau lumineux transitant par la fibre optique. C'est pourquoi le coin optique de réglage 40 est associé à un asservissement qui est fonction de la longueur d'onde. Pour cela, les déplacements du coin 40 sont commandés par l'intermédiaire d'un organe 29 lui-même asservi par un microprocesseur 30 commandé par un signal prélevé dans le circuit de balayage 2. Ainsi, on a un asservissement de la position du coin 40 en fonction de la longueur d'onde utilisée dans le circuit à l'instant considéré. Il faut ajouter que des mécanismes micrométriques 38 et 39 permettent de régler exactement la position des miroirs 5, 20, 24 et 37 et des extrémités 7, 18, 26 et 35 des fibres optiques. On comprend en effet que compte tenu du très faible diamètre des fibres optiques, il est indispensable que la totalité des faisceaux lumineux frappe effectivement les faces d'entrée des fibres pour obtenir un rendement optimal.

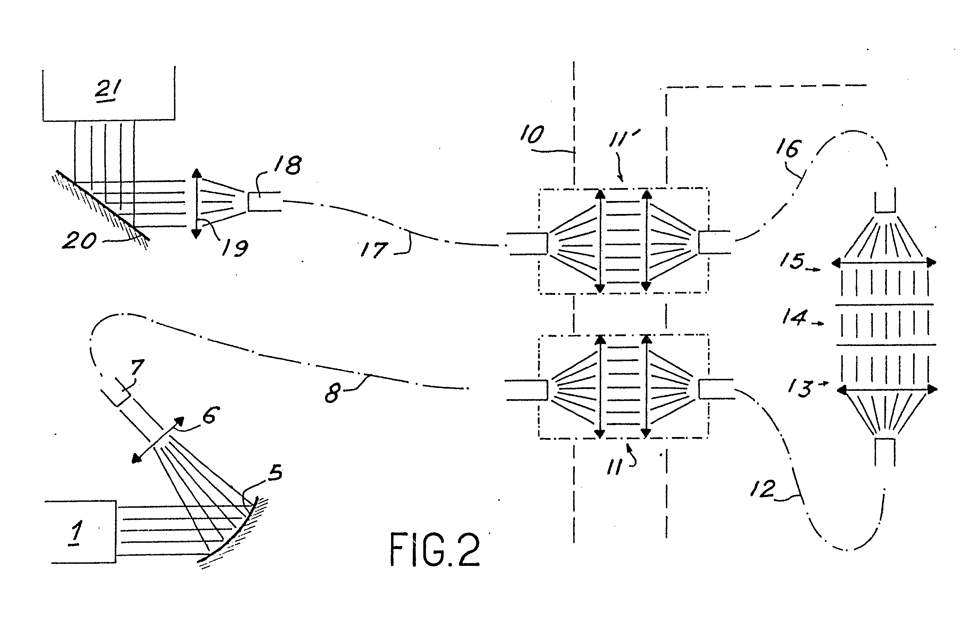

En se référant à la figure 2, on a représenté la propagation du faisceau lumineux dans la boucle de mesure I. On se rend ainsi mieux compte de l'action des différents organes optiques. On a repris bien sûr sur cette figure les références qui avaient déjà été utilisées sur la figure 1.

Par rapport au montage complet représenté sur la figure 1, on peut faire les remarques suivantes correspondant à des variantes de réalisation. On pourrait envisager qu'une partie de la boucle de référence se trouve en milieu irradiant, c'est-à-dire par exemple à l'intérieur de la cellule de l'enceinte 10. On aurait ainsi une certaine compensation entre la voie de mesure et la voie de référence pour ce qui est de l'effet de l'irradiation.

En outre, les cellules de mesure ou de référence peuvent être, soit de conception classique ou de conception particulière, comme celles qui ont été décrites dans les deux demandes de brevet dont il a déjà été fait état.

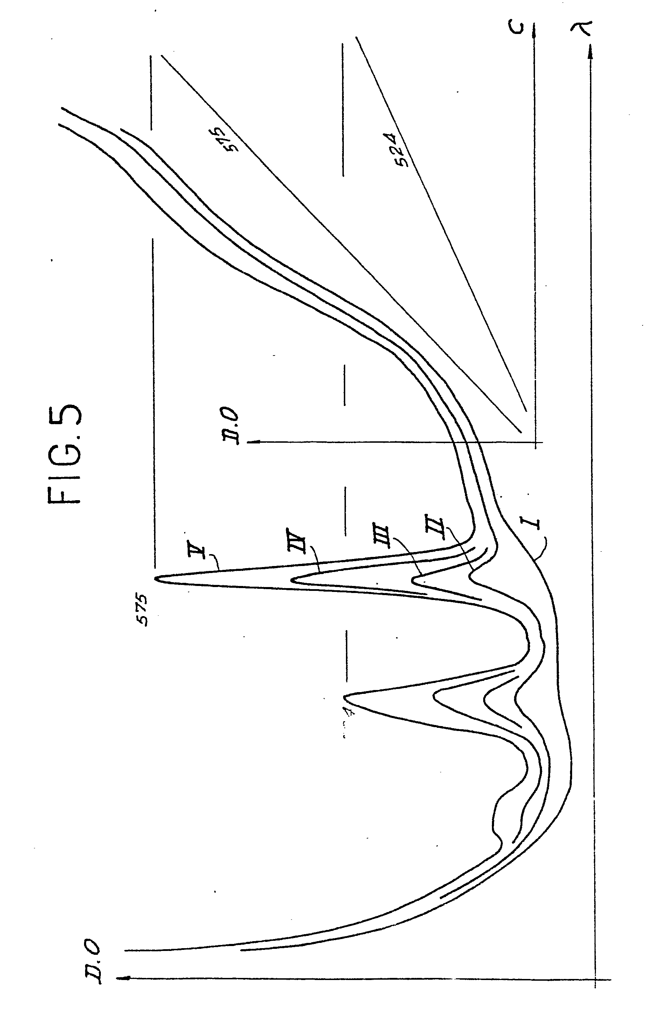

A plus forte raison, le dispositif peut être utilisé pour des mesures d'éléments non radiactifs et par conséquent sans enceinte de protection, c'est par exemple le cas de mesure de traces avec des cuves de grand parcours optique raccordées par fibres optiques dont les résultats sont illustrés par la figure 5.

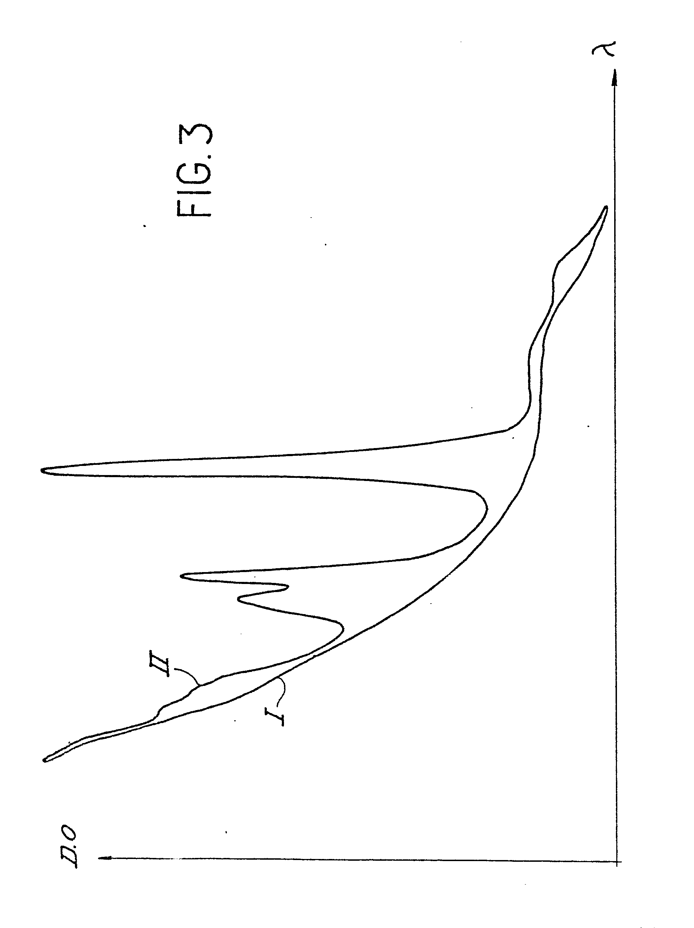

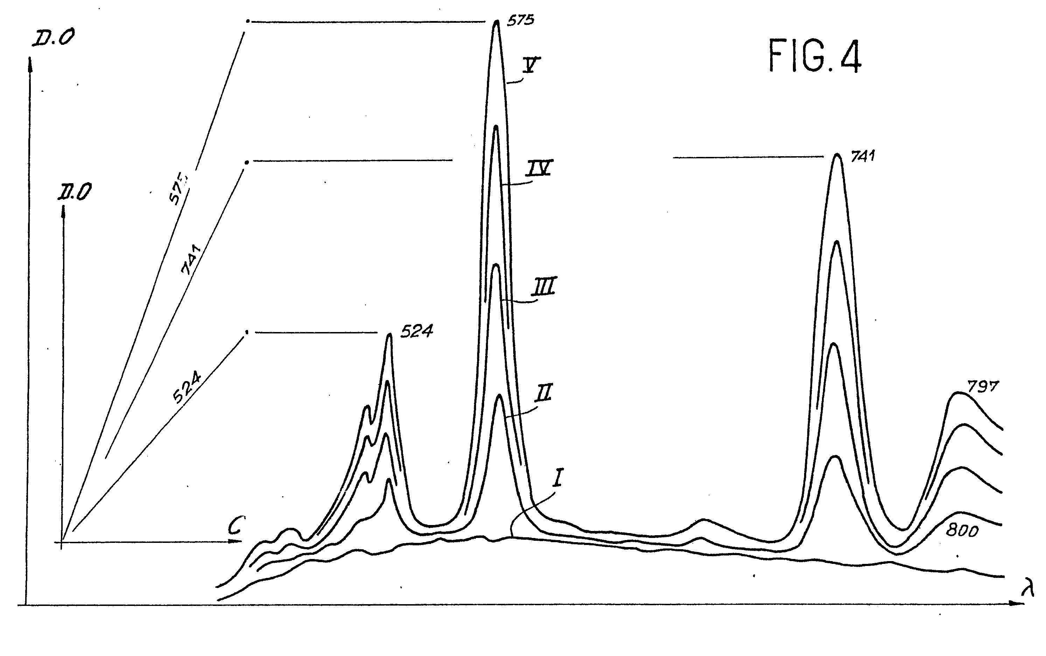

En se référant aux courbes des figures 3 et 4, on appréciera mieux l'efficacité du dispositif de mesure objet de l'invention et en particulier l'effet de compensation.

Sur la figure 3 qui donne la densité optique (en unité arbitraire) en fonction de la longueur d'onde $\lambda$ (en nm) pour une solution de néodyme (10,045 8 g de nitrate de néodyme dans 100 cc de $HNO_3$ à 10 %) dans un dispositif sans compensation. La courbe I donne la ligne de base correspondant à une solution ne contenant que $HNO_3$ à 10 %, alors que la courbe II donne l'analyse spectrale de la solution. On voit que la ligne de base n'est pas du tout horizontale et que l'interprétation directe de la courbe II est très difficile.

Sur la figure 4, on a représenté les courbes correspondant à la même analyse, mais avec la compensation due à la boucle de référence. La courbe I correspond à du $HNO_3$ pur, les courbes II, III, IV et V correspondent à des concentrations en nitrate respectives de 1/4, 1/2, 3/4 et 1.

On voit que la ligne de base I est sensiblement horizontale dans une large plage de longueurs d'onde de 470 nm à 850 nm. Les pics caractéristiques de mesure apparaissent également très nettement. On a reporté également sur cette figure les variations de densité optique (D. O.) en fonction de la concentration (C/4, C/2, 3C/4, C) pour les pics 524, 575 et 741. Cette courbe montre qu'avec le dispositif objet de l'invention, la loi de Beer est bien vérifiée.

Sur la figure 5, on a représenté les courbes qui donnent la densité optique (D. O.) en fonction de la longueur d'onde ($\lambda$) pour une solution de 0,05 g de néodyme pour 100 cc de $HNO_3$ à 10 % dans un dispositif partiellement compensé par une fibre optique et avec utilisation d'une cuve de grand parcours optique raccordée par des fibres. La courbe I correspond à $HNO_3$ pur alors que les courbes II, III, IV, V, correspondent à des concentrations en nitrate respectives de 1/4, 1/2, 1 et 3/2. On voit que la ligne de base est sensiblement horizontale entre la plage 470 nm à 580 nm. Les pics caractéristiques apparaissent clairement sur la courbe ajoutée qui donne la densité optique (D. O.) en fonction de la concentration C.

On peut également travailler en lumière blanche. Dans ce cas, on place derrière la cellule de mesure des filtres de façon à étudier la réponse dans la bande spectrale définie par chacun des filtres. On peut ainsi étudier la réponse dans la bande spectrale définie par le filtre.

Il découle de la description précédente que le dispositif objet de l'invention, permet des déterminations spectrales de solutions avec une bonne précision bien que la mesure se fasse à distance et dans une enceinte de protection contre des rayonnements présents en milieu radioactif.

Le système de compensation fixe (par fibres optiques) est d'un emploi aisé. L'asservissement par microprocesseur permet une meilleure linéarisation de la ligne de base et un rattrapage de la dérive due à l'atténuation de la transmission des fibres optiques sous l'effet des rayonnements.

A titre de variante il faut indiquer que les miroirs 5, 20, 24 et 37 pourraient être remplacés par des portions de fibres optiques coudées à angle droit permettant un renvoi à 90° du faisceau lumineux. Bien entendu, ces portions de fibres optiques doivent être associées à des lentilles convenables.

Ce dispositif permet, en particulier, la mesure valencielle de l'uranium, du plutonium et du neptunium dans le proche infra-rouge et, avec des cuves à grand parcours optique, l'analyse de traces de ces corps en solution. Grâce à son système de compensation il est utilisable dans les domaines de longueurs d'onde allant de l'ultraviolet à l'infra-rouge.

Il est possible avec une autre configuration du spectrophotomètre de travailler en mode infra-rouge avec une source émettrice de lumière blanche, donc d'infra-rouge, puisque le monochromateur est placé juste après la source et que le monochromatisme est réalisé en aval du compartiment 4. L'analyse d'un échantillon en mode infra-rouge, permet la détermination d'une température.

**Revendications**

1. Dispositif spectrophotométrique pour mesure à distance, comportant une source lumineuse, un monochromateur, un détecteur (21), une optique pour définir un faisceau lumineux de mesure et un faisceau lumineux de référence et un compartiment (4), situé entre la source et le détecteur, les faisceaux lumineux entrant et sortant de ce compartiment, le dispositif se caractérisant en ce qu'il comporte en outre :

— au moins une cellule de mesure (14) apte à recevoir une solution à analyser et distante dudit compartiment (4),

— une boucle de mesure (I) comprenant un premier système optique (5, 6) logé dans ledit compartiment (4) pour diriger le faisceau de mesure hors dudit compartiment, une première fibre optique (8, 12) dont une première extrémité (7) reçoit ledit faisceau lumineux de mesure dudit premier système optique et dont l'autre extrémité est placée vis-à-vis d'une ou plusieurs lentilles (13) disposées sur la face d'entrée de la ou desdites cellules (14), au moins une deuxième (16, 17) fibre optique raccordant une ou plusieurs deuxièmes lentilles (15) disposées sur la face de sortie de la ou desdites cellules (14) à une entrée dudit compartiment (4), et un deuxième système optique (19, 20) logé dans ledit compartiment et apte à diriger le faisceau lumineux émis par ladite deuxième fibre optique hors dudit compartiment vers ledit détecteur (21), et

— une boucle de référence (II) comprenant un troisième système optique (24, 25) logé dans ledit compartiment (4) pour diriger le faisceau de référence hors dudit compartiment, au moins une troisième fibre optique (27, 34) dont une première extrémité (26) reçoit ledit faisceau lumineux de référence dudit troisième système optique et dont l'autre extrémité est raccordée à une entrée dudit compartiment, un quatrième système optique (36, 37) apte à diriger le faisceau lumineux émis par ladite troisième fibre optique (27) vers ledit détecteur (21), et des moyens optiques (29, 30, 40) permettant de compenser, au cours du temps, les modifications possibles des caractéristiques de transmission des fibres optiques de la boucle de mesure causées par la solution à analyser.

2. Dispositif selon la revendication 1, caractérisé en ce que la ou lesdites cellules de mesure (14) sont logées dans une enceinte de protection (10) et en ce que chacune desdites deux fibres optiques (8, 12, 16, 17) de la boucle de mesure (I) est constituée par deux portions de fibre optique entre lesquelles est interposé un système de traversée (11, 11′) de ladite enceinte de protection (10).

3. Dispositif selon l'une quelconque des revendications 1 et 2, caractérisé en ce que ladite boucle de référence comprend une cellule de référence (32) apte à recevoir une solution de référence et en ce que ladite fibre optique de la boucle de référence est constituée par deux portions de fibre optique (27, 34) entre lesquelles est placée ladite cellule de référence (32) par l'intermédiaire de deux lentilles (31, 33).

4. Dispositif selon l'une quelconque des revendications 2 et 3, caractérisé en ce que la solution de mesure est radioactive et en ce qu'une partie de la fibre optique de la boucle de référence est logée dans ladite enceinte.

5. Dispositif selon l'une quelconque des revendications 2 et 3, caractérisé en ce que la solution de mesure est radioactive et en ce que les moyens de compensation comprennent un coin optique de réglage (40) dont la position est asservie (29, 30) en valeur et synchronisé avec la commande en longueurs d'onde de la source lumineuse (2) de telle façon que ledit coin compense l'effet du rayonnement sur les fibres optiques de la boucle de mesure (I) logée dans ladite enceinte (10).

6. Dispositif selon l'une quelconque des revendications 1 à 5, caractérisé en ce que dans les boucles de mesure et/ou de référence, des coins optiques (9, 28) de compensation pour l'équilibrage des deux faisceaux lumineux sont interposés.

## Claims

1. Remote measuring spectrophotometric device comprising a light source, a monochromator, a sensor (21), an optical means defining a measurement light beam and a reference light beam, and a compartment (4) located between the source and the sensor, the light beams entering and leaving said compartment, the device being characterized in that it additionally comprises :

— at least one measurement cell (14) adapted to receive a solution for analysis, and remotely located from said compartment (4),

— a measurement loop (I) comprising a first optical system (5, 6) in said compartment (4) for directing the measurement light beam out of said compartment, a first optical fibre (8, 12) whose first end (7) receives said measurement light beam from said first optical system, and whose other end is located at one or more lenses (13) disposed at the entry face of said cell or cells (14), at least one second optical fibre (16, 17) connecting one or more second lenses (15) disposed at the exit face of said cell or cells (14) to an entry of said compartment (4), and a second optical system (19, 20) in said compartment and adapted to direct the light beam emitted by said second optical fibre out of said compartment towards said sensor (21), and

— a reference loop (II) comprising a third optical system (24, 25) in said compartment (4) to direct the reference beam out of said compartment, at least one third optical fibre (27, 34) whose first end (26) receives said reference light beam from said third optical system, and whose other end is connected to an inlet of said compartment, a fourth optical system (36, 37) adapted to direct the light beam emitted by said third optical fibre (27) towards said sensor (21), and optical means (29, 30, 40) for compensating, in the course of time ; any changes in the transmission characteristics of the optical fibres of the measurement loop, caused by the solution being analyzed.

2. Device according to Claim 1 characterized in that said measurement cell or cells (14) are located in a protective enclosure (10) and in that each of said two optical fibres (8, 12, 16, 17) of the measurement loop (I) comprises two portions of optical fibre interposed between which is a system (11, 11') for transmission through said protective enclosure (10).

3. Device according to either of Claims 1 and 2 characterized in that said reference loop comprises a reference cell (32) adapted to receive a reference solution, and in that the said optical fibre of the reference loop comprises two portions of optical fibre (27, 34), said reference cell (32) being located between two lenses (31, 33) between said two portions of optical fibre.

4. Device according to either of Claims 2 and 3 characterized in that the solution measured is radioactive and in that a portion of the optical fibre of the reference loop is located within the said enclosure.

5. Device according to either of Claims 2 and 3 characterized in that the solution measured is radioactive and in that the compensating means comprises an adjustable optical wedge (40) whose position is controlled (29, 30) and synchronized with the wavelength control of the light source (2) whereby said wedge compensates for the effect of radiation on the optical fibres of the measurement loop (I) located within said enclosure.

6. Device according to any one of Claims 1 to 5 characterized in that compensating optical wedges (9, 28) for equilibrating the two light beams are located in the measurement and/or reference loops.

**Ansprüche**

1. Spektralphotometrische Einrichtung zur Messung auf Entfernung, mit einer Lichtquelle, einem Monochromator, einem Empfänger (21), einer Optik zur Bildung eines Meßlichtbündels und eines Bezugslichtbündels, und einem Raum (4), der zwischen der Lichtquelle und dem Empfänger gelegen ist, wobei die Lichtbündel in diesen Raum eintreten und diesen verlassen, dadurch gekennzeichnet, daß diese Einrichtung außerdem die folgenden Merkmale aufweist:

— mindestens eine Meßzelle (14), die zur Aufnahme einer zu analysierenden Lösung eingerichtet und vom Raum (4) mit Abstand angeordnet ist,

— eine Meßschleife (I), die ein erstes optisches System (5, 6) aufweist, das im Raum (4) angeordnet ist, um das Meßlichtbündel von diesem Raum aus zu lenken, eine erste optische Faser (8, 12), deren erstes Ende (7) das Meßlichtbündel vom ersten optischen System empfängt und deren anderes Ende gegenüber einer oder mehreren Linsen (13) angeordnet ist, welche auf der Eintrittsfläche der Zelle oder Zellen (14) angeordnet ist, mindestens eine zweite optische Faser (16, 17), welche eine oder mehrere zweite Linsen (15), die an der Austrittsfläche der genannten Zelle oder Zellen (14) angeordnet sind, mit einem Eingang des Raumes (4) verbinden, und ein zweites optisches System (19, 20), das im Raum angeordnet ist und dazu eingerichtet ist, das Lichtbündel, das von der zweiten optischen Faser ausgeht, vom Raum zum Empfänger (21) zu lenken, und

— eine Bezugsschleife (II), die ein drittes optisches System (24, 25) aufweist, das im Raum (4) angeordnet ist, um das Bezugslichtbündel von diesem aus zu lenken, mindestens eine dritte optische Faser (27, 34), deren erstes Ende (26) das Bezugslichtbündel des dritten optischen Systems aufnimmt und von welchem das andere Ende an einen Eingang des Raumes angeschlossen ist, ein viertes optisches System (36, 37), das dazu eingerichtet ist, das von der dritten optischen Faser (27) abgegebene Lichtbündel zum Empfänger (21) zu lenken, sowie optische Mittel (29, 30, 40), welche es gestatten, im Verlauf die Änderungen auszugleichen, die bei den Übertragungseigenschaften der optischen Fasern der Meßschleife möglich sind und die durch die zu analysierende Lösung verursacht sind.

2. Einrichtung nach Anspruch 1, dadurch gekennzeichnet, daß die Meßzelle oder Meßzellen (14) in einer Schutzeinfassung (10) angeordnet sind, und daß die beiden optischen Fasern (8, 12, 16, 17) der Meßschleife (I) durch zwei optische Faserabschnitte gebildet sind, zwischen welche ein System zum Durchqueren (11, 11') der Schutzeinfassung (10) zwischengeschaltet ist.

3. Einrichtung nach einem der Ansprüche 1 oder 2, dadurch gekennzeichnet, daß die Bezugsschleife eine Bezugszelle (32) umfaßt, die dazu eingerichtet ist, eine Bezugslösung aufzunehmen, und daß die optische Faser der Bezugsschleife durch zwei Abschnitte einer optischen Faser (27, 34) gebildet ist, zwischen welchen die genannte Bezugszelle (32) unter Zwischenwirkung zweier Linsen (31, 33) angeordnet ist.

4. Einrichtung nach einem der Ansprüche 2 oder 3, dadurch gekennzeichnet, daß die Meßlösung radioaktiv ist, und daß nur ein Teil der optischen Faser der Bezugsschleife in der Schutzeinfassung angeordnet ist.

5. Einrichtung nach einem der Ansprüche 2 oder 3, dadurch gekennzeichnet, daß die Meßlösung radioaktiv ist und daß die Ausgleichsmittel ein optisches Regulier-Dreiecksprisma (40) aufweisen, dessen Lage dem Wert nach gesteuert ist (29, 30) und mit der Steuerung in Wellenlängen der Lichtquelle (2) derart synchronisiert ist, daß das genannte Prisma die Wirkung der Strahlung auf die optischen Fasern der Meßschleife (I) ausgleicht, die in der Schutz — umfassung (10) angeordnet ist.

6. Einrichtung nach einem der Ansprüche 1 bis 5, dadurch gekennzeichnet, daß in der Meßschleife und/oder der Bezugsschleife optische Ausgleichs-Dreiecksprismen (9, 28) zwischengeschaltet sind, um einen Ausgleich für das Gleichgewicht der beiden Lichtbündel zu erreichen.

FIG.1

0 015 170

FIG.2

FIG. 3

FIG.4

FIG.5